# EUROPÄISCHE PATENTANMELDUNG

(11) **EP 4 671 098 A1**
(43) Veröffentlichungstag der Anmeldung: **31.12.2025**
(21) Anmeldenummer: 25182583.2
(22) Anmeldetag: 13.06.2025
(51) Int. Cl.: B62J 6/16, B62K 21/12

(54) **FAHRTRICHTUNGSANZEIGEEINRICHTUNG FÜR FAHRRÄDER**

(30) Priorität: 28.06.2024 DE 102024118457
(71) Anmelder: Busch & Müller KG, 58540 Meinerzhagen (DE)
(72) Erfinder: Hille, Jan-Erik, 57462 Olpe (DE)
(74) Vertreter: Patentanwälte Dörner & Kötter PartG mbB

(57) **Zusammenfassung**

Die Erfindung betrifft eine Fahrtrichtungsanzeigeeinrichtung für Fahrräder, umfassend zwei Fahrtrichtungsanzeigemodule F mit jeweils einer Leuchteinheit (3) zur beidseitig der Längsachse eines Fahrrades auskragenden Montage an dem Lenker des Fahrrades, eine Bedieneinheit (8) zur Montage in der Nähe jeweils eines Griffs (G) des Fahrradlenkers (L) des Fahrrades, sowie wenigstens eine Steuereinheit (7) zur Ansteuerung der beiden Leuchteinheiten (3) der beiden Fahrtrichtungsanzeigemodule (F), die mit den beiden Bedieneinheiten (8) verbunden ist, wobei die wenigstens eine Steuereinheit (7) eingerichtet ist, bei Betätigung eines Betätigungsmittels (9) der Bedieneinheit (8) die dieser Bedieneinheit (8) zugeordnete Leuchteinheit (3) zu aktivieren und zugleich die andere Leuchteinheit (3) zu deaktivieren

## Beschreibung

Die Erfindung betrifft eine Fahrtrichtungsanzeigeeinrichtung für Fahrräder nach dem Oberbegriff des Patentanspruchs 1.

Beim Fahrradfahren erfolgt das Anzeigen einer Fahrtrichtungsänderung bspw. zum Abbiegen oder zum Wechseln der Fahrspur üblicherweise durch Ausstrecken des Arms in die Richtung, in die die Fahrtrichtung geändert werden soll. Hierzu muss der Radfahrer eine Hand von Lenker nehmen.

Grundsätzlich stellt diese Vorgehensweise für geübte Radfahrer kein Problem dar. Allerdings ist das Handzeichen des Radfahrers bei Dunkelheit oder schlechten Sichtverhältnissen für andere Verkehrsteilnehmer schlecht zu erkennen. Hinzu kommt, dass mit nur einer Hand am Lenker die Fahrstabilität negativ beeinflusst ist, bspw. beim Bremsen des Fahrrads mit nur einer Hand am Lenker. Und auch bei Lastenfahrrädern ist bei voller Beladung das Abbiegen mit nur einer Hand unfallträchtig. Das gilt genauso bei schweren E-Bikes oder Pedelecs (Pedal Electric Cycles).

Zur Vermeidung dieser Probleme ist es bekannt, Fahrtrichtungsanzeiger an Fahrrädern, E-Bikes, Pedelecs aber auch E-Scootern (nachfolgend gemeinschaftlich als "Fahrräder" bezeichnet) anzubringen. Die Fahrtrichtungsanzeiger müssen nach dem Einschalten mit einer vorgegebenen Frequenz zwischen hell und dunkel blinken. Sie müssen so angebracht und beschaffen sein, dass die Anzeige der beabsichtigten Fahrtrichtungsänderung unter allen Beleuchtungs- und Betriebsverhältnissen von anderen Verkehrsteilnehmern, für die ihre Erkennbarkeit von Bedeutung ist, deutlich wahrgenommen werden kann.

Fahrtrichtungsanzeigeeinrichtungen an Fahrrädern sind an sich bekannt. Sie bestehen aus mindestens einer Betätigungseinheit, welche am Lenker angebracht ist, sowie Blinkelementen, deren Leuchtelemente links und rechts der Längsachse des Fahrrads angebracht sind. Die Betätigungseinheiten sind üblicherweise mit einem Betätigungsmittel in Form eines Tasters oder Schiebers versehen, der auf der den Lenkerenden abgewandten (Innen-)Seite des dem jeweiligen Lenkergriffs am Lenker des Fahrrades befestigt ist.

Die bekannten Fahrtrichtungsanzeigeeinrichtungen erfüllen grundsätzlich die an sie gestellten Anforderungen. Es kommt jedoch öfter vor, dass Fahrradfahrer vergessen, eine Leuchteinheit (Blinker) nach dessen Betätigung wieder zu deaktivieren. Bei Fahrtrichtungsanzeigeeinrichtungen, die für jedes der beiden Leuchteinheiten eine separate Bedieneinheit aufweisen, ergibt sich hier die Problematik, dass bei einem nachfolgenden, entgegengesetzten Abbiegevorgang die zweite Leuchteinheit aktiviert wird, was ein gemeinsames Blinken beider Leuchteinheiten zur Folge hat, das als Warnblinken erkannt wird. Entgegen der Meinung des Fahrradfahrers ist der nachfolgende Verkehr in diesem Fall nicht über den beabsichtigten Abbiegevorgang in Kenntnis gesetzt. Unter dem Aktivieren bzw. Deaktivieren einer Leuchteinheit ist vorliegend das Einschalten bzw. Ausschalten einer Abfolge einer vorgegebenen Frequenz zwischen hell und dunkel (Blinken) der Leuchteinheit zu verstehen.

Hier will die Erfindung Abhilfe schaffen. Der Erfindung liegt die Aufgabe zugrunde eine Fahrtrichtungsanzeigeeinrichtung für Fahrräder zu schaffen, bei der eine versehentliche Initiierung eines Warnblinkers vermieden ist. Gemäß der Erfindung wird diese Aufgabe mit den Merkmalen des Patentanspruchs 1 gelöst.

Mit der Erfindung eine Fahrtrichtungsanzeigeeinrichtung für Fahrräder geschaffen, bei der eine versehentliche Initiierung eines Warnblinkers vermieden ist. Dadurch, dass die Steuereinheit eingerichtet ist, bei Betätigung eines Betätigungsmittels der Bedieneinheit die dieser Bedieneinheit zugeordnete Leuchteinheit zu aktivieren und zugleich die andere Leuchteinheit zu deaktivieren, ist eine versehentliche gleichzeitige Aktivierung beider Leuchteinheiten verhindert.

In Weiterbildung der Erfindung ist die Steuereinheit eingerichtet, bei gleichzeitiger Betätigung eines Betätigungsmittels an beiden Bedieneinheiten beide Leuchteinheiten zu aktivieren. Hierdurch ist ein - beabsichtigter - Warnblinkvorgang ermöglicht.

Die Funktionen der Steuereinheit können sowohl durch eine Verschaltung von elektrischen Bauelementen, als auch durch einen integrierten Mikroprozessor realisiert sein.

In Ausgestaltung der Erfindung ist die Steuereinheit eingerichtet, bei lediglich kurzem Antippen eines Betätigungsmittels einer Bedieneinheit die dieser Bedieneinheit zugeordnete Leuchteinheit lediglich für eine definierte Blinksequenz zu aktivieren. Hierzu weist die Steuereinrichtung einen Timer auf.

In weiterer Ausgestaltung der Erfindung weist die Steuereinrichtung einen Mikroprozessor auf, wobei eine Eingabeeinrichtung vorhanden ist, über die eine individuelle Einstellung einer gewünschten Blinksequenz ermöglicht ist.

In Weiterbildung der Erfindung ist die Steuereinheit mit einer Anlernfunktion versehen. Hierdurch ist es möglich, andere Fahrtrichtungsanzeigeeinrichtungen in die Steuerung mit einzubinden, bspw. wenn heckseitig eine weitere Fahrtrichtungsanzeigeeinrichtung angeordnet werden soll. So können die jeweils auf einer Seite der Längsmittelachse angeordneten Leuchteinheiten zusammengeschaltet werden, so dass diese bei Aktivierung der Lenkerseitigen Leuchteinheit synchron blinken.

In Ausgestaltung der Erfindung ist die Steuereinheit und/oder wenigstens ein Fahrtrichtungsanzeigemodul mit einem Akkumulator verbunden. Hierbei kann es sich, sofern es sich bei dem Fahrrad um ein E-Bike handelt, um den Akku des Fahrrades handeln. Es kann auch ein Akkumulator in der Steuereinheit oder auch in einer oder mehreren Fahrtrichtungsanzeigemodulen integriert sein. Die Integration eines Akkumulators in einem Fahrtrichtungsanzeigemodul bietet den Vorteil, dass dieses einfach nachgerüstet werden kann, ohne dass es zwingend einer Verlegung von Kabeln bedarf.

In weiterer Ausgestaltung der Erfindung ist die Steuereinrichtung kabellos, beispielsweise per Funk, insbesondere per Bluetooth mit den Leuchteinheiten verbunden, wobei die Fahrtrichtungsanzeigemodule mit einem Funkempfänger versehen sind. Hierdurch ist eine Ansteuerung der Leuchteinheiten durch die Steuereinheit ohne das Erfordernis einer Verlegung von Kabeln ermöglicht, wodurch eine Nachrüstung eines Fahrrades mit der Fahrtrichtungsanzeigeeinrichtung weiter erleichtert ist.

In weiterer Ausgestaltung der Erfindung ist die Steuereinrichtung eingerichtet, bei Unterschreiten einer Grenzspannung des Akkumulators die Leuchteinheiten bei Betätigung einer Bedieneinheit mit einer geänderten Blinkfrequenz anzusteuern. Hierdurch ist eine Information über einen niedrigen Akku-Ladezustand unmittelbar über die im Sichtfeld des Fahrers befindlichen Leuchteinheiten ermöglicht, ohne dass es einer separaten Ladeanzeige bedarf.

In Weiterbildung der Erfindung sind die Fahrtrichtungsanzeigemodule als Lenkerendenblinker ausgebildet und umfassen jeweils ein Gehäuse, wobei die beiden Bedieneinheiten jeweils außen an einem der Gehäuse angeordnet sind. Hierdurch ist eine Bedienung der Leuchteinheiten über die Bedieneinheiten ermöglicht, ohne dass der Fahrradfahrer hierzu die Hand vom Lenkergriff nehmen muss. Durch die außen an dem jeweiligen Gehäuse angebrachten Betätigungsmittel entfällt zudem eine getrennte Montage der Bedieneinheit. Äußerst bevorzugt ist in dem Gehäuse wenigstens eines Fahrtrichtungsanzeigemoduls ein Akkumulator angeordnet.

In Ausgestaltung der Erfindung sind die Betätigungsmittel der Bedieneinheiten von einem Ring gebildet, der das Gehäuse umgibt. Diese Gestaltung weist den Vorteil auf, dass eine Betätigung der Fahrtrichtungsanzeigeeinrichtung nicht allein an einer Stelle, sondern an beliebiger Stelle ringsum das Gehäuse erfolgen kann.

In alternativer Ausgestaltung der Erfindung können die Betätigungsmittel von mindestens einem Ringsegment gebildet sein, welches das Gehäuse mindestens bereichsweise umgibt.

In Weiterbildung der Erfindung sind die Betätigungsmittel der Bedieneinheiten auf dem Gehäuse schwimmend gelagert. Hierdurch kann ein Auslösen der Fahrtrichtungsanzeigeeinrichtung in axialer Richtung des Fahrradlenkers erfolgen.

Vorteilhaft korrespondieren die Betätigungsmittel der Bedieneinheiten mit mindestens einem Sensor, wodurch ein zuverlässiges Auslösen und Abstellen der Fahrtrichtungsanzeigeeinrichtung ermöglicht ist.

In anderer Weiterbildung der Erfindung wirken die Betätigungsmittel mit mindestens einem Rückstellelement zusammen. Hierdurch ist der Bedienkomfort der Fahrtrichtungsanzeigeeinrichtung erhöht, da der Benutzer unabhängig vom jeweiligen Betriebszustand die Betätigungsmittel immer in derselben Position vorfindet, wodurch die Gefahr von Fehlbedienungen reduziert ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer erfindungsgemäßen Fahrtrichtungsanzeigeeinrichtung in an einen Lenker angebautem Zustand;
- Figur 2: die schematische Darstellung einer erfindungsgemäßen Fahrtrichtungsanzeigeeinrichtung in an den Lenker angebautem Zustand in anderer Ausbildung;
- Figur 3: die schematische Darstellung einer Bedieneinheit;
- Figur 4: die schematische Darstellung einer Bedieneinheit in anderer Ausbildung;
- Figur 5: die schematische Darstellung einer Bedieneinheit in einer weiteren Ausbildung;
- Figur 6: die schematische Darstellung einer Bedieneinheit in einer zusätzlichen Ausbildung;
- Figur 7: die schematische Darstellung einer abgewandelten Bedieneinheit;
- Figur 8: die schematische Darstellung der in Figur 7 dargestellten Bedieneinheit in Funktionsstellung.

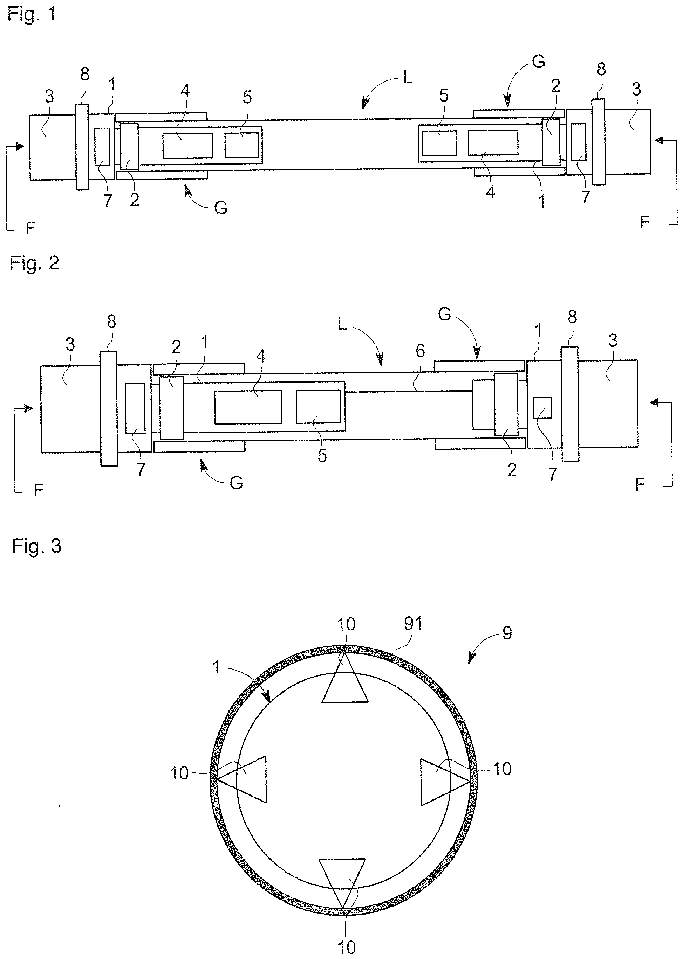

Die als Ausführungsbeispiel gewählte Fahrtrichtungsanzeigeeinrichtung für Fahrräder umfasst zwei Fahrtrichtungsanzeigemodule F, die in Form von Lenkerendenblinkern ausgeführt sind und die in den Figuren 1 und 2 in an einer Lenkstange L verbautem Zustand dargestellt sind. Die Lenkstange L ist rohrförmig ausgeführt und weist zwei Griffe G auf, die jeweils die Lenkstange L umschließen.

Die Fahrtrichtungsanzeigemodule F sind im Ausführungsbeispiel identisch aufgebaut und umfassen jeweils ein Gehäuse 1, welches bereichsweise in die rohrförmige Lenkstange L ragt. Zum zuverlässigen Halt der Fahrtrichtungsanzeigemodule F ist jedes Gehäuse 1 in seinem in der Lenkstange L befindlichen Bereich mit einem Klemmelement 2 versehen. In Abwandlung des Ausführungsbeispiels können auch mehrere Klemmelemente 2 an einem Gehäuse 1 vorgesehen sein.

In dem der Lenkstange L abgewandten Ende des Gehäuses 1 und damit außerhalb der Lenkstange L ist eine Leuchteinheit 3 angeordnet. Das Gehäuse 1 ist in diesem Bereich durchsichtig oder zumindest transluzent ausgeführt. Die Leuchteinheit 3 ist vorzugsweise von einer oder mehreren LEDs (light-emitting diodes) gebildet.

In dem Gehäuse 1 ist ein Akkumulator 4 angeordnet, mit dessen Hilfe die Leuchteinheit 3 des Fahrtrichtungsanzeigemoduls F mit elektrischer Energie versorgt wird. Bei dem Akkumulator handelt es sich im Ausführungsbeispiel um einen wieder aufladbaren Akkumulator. Aus diesem Grund ist in dem Gehäuse 1 an dem der Leuchteinheit 3 abgewandten Ende eine Ladebuchse 5 angeordnet, mit deren Hilfe ein Anschluss an ein Ladegerät möglich ist. In Abwandlung des Ausführungsbeispiels besteht selbstverständlich auch die Möglichkeit, nicht wieder aufladbare Batterien anstelle des Akkumulators zu verwenden. Auch ein Anschluss der Fahrtrichtungsanzeigemodule F an den Akkumulator eines E-Bikes ist möglich.

Das Fahrtrichtungsanzeigemodul F weist eine Bedieneinheit 8 auf, die von Betätigungsmitteln 9 gebildet ist, welche außen am Gehäuse 1 angeordnet sind. Die Bedieneinheit 8 ist mit einer im dem Gehäuse 1 angeordneten Steuereinheit 7 verbunden, die wiederum mit der Leuchteinheit 3 verbunden ist. Die Betätigungsmittel 9 können unterschiedlich ausgebildet sein.

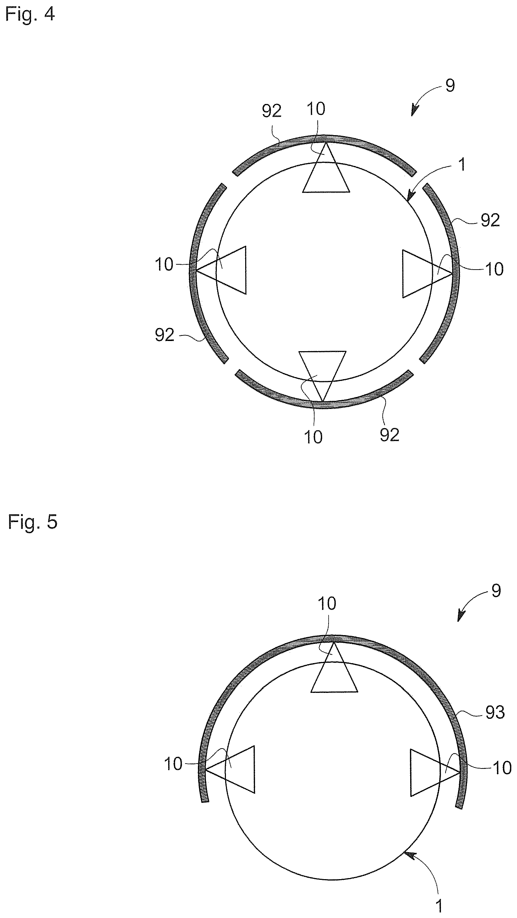

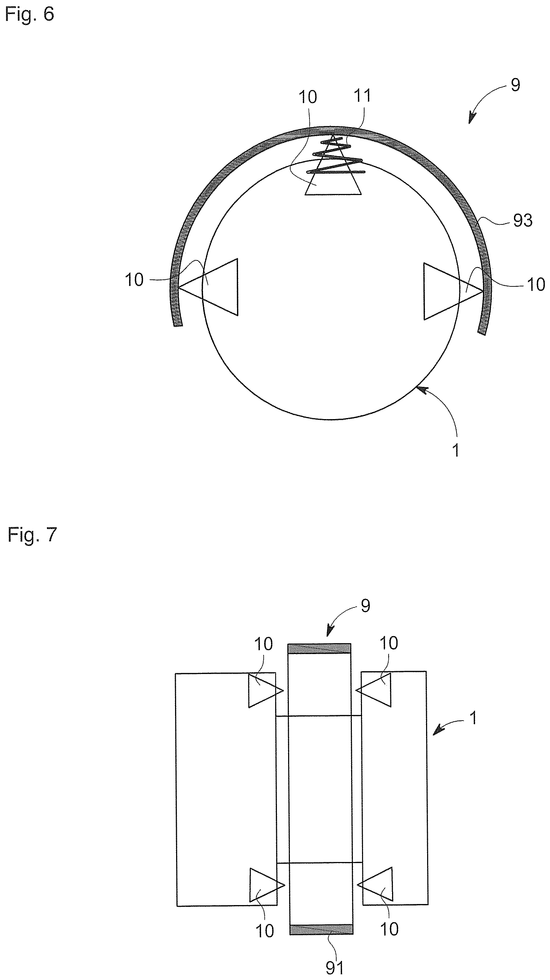

In einer ersten Ausführung, wie sie in Figur 3 schematisch dargestellt ist, sind die Betätigungsmittel 9 von einem Ring 91 gebildet, der das Gehäuse 1 umgibt. Im Ausführungsbeispiel nach Figur 4 sind die Betätigungsmittel 9 dagegen von vier Ringsegmenten 92 gebildet, die das Gehäuse 1 umgeben. In den Ausführungsbeispielen nach den Figur 5 und 6 sind die Betätigungsmittel 9 von einem Ringsegment 93 gebildet, welches das Gehäuse 1 lediglich bereichsweise umgibt.

Die Betätigungsmittel 9 korrespondieren jeweils mit mindestens einem Sensor 10. Die Sensoren 10 sind derart gestaltet, dass sie im Falle einer Kontaktierung mit einem Ring 91 oder Ringsegment 92, 93 ein Signal zur Steuereinheit 7 aussenden, welches dann für die Aktivierung oder Deaktivierung der jeweiligen Leuchteinheit 3 Sorge trägt. Die Kontaktierung mit den Sensoren 10 erfolgt bei diesen Ausführungen durch eine radiale Bewegung des Rings 91 bzw. der Ringsegmente 92, 93.

Im Ausführungsbeispiel nach Figur 6 wirken die Betätigungsmittel 9 mit einem Rückstellelement 11 zusammen. Im Ausführungsbeispiel handelt es sich bei dem Rückstellelement 11 um eine Feder, die bspw. nach der Betätigung des Ringsegments 93 dieses wieder in seine Ausgangsposition zurückführt.

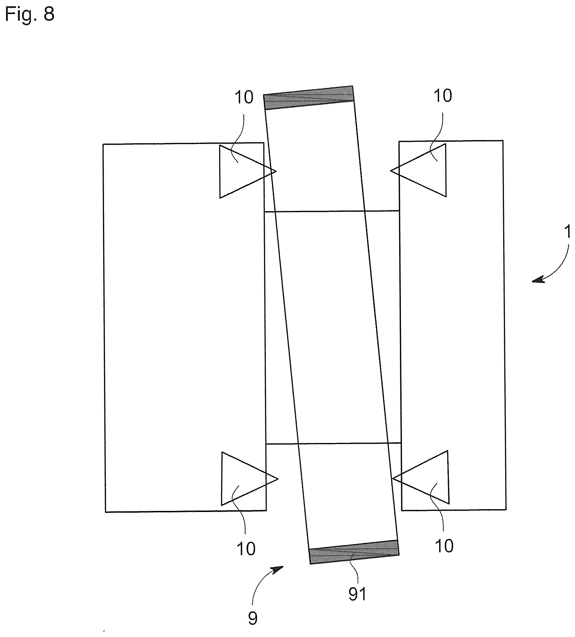

Im Ausführungsbeispiel nach den Figuren 7 und 8 sind die Betätigungsmittel 9 auf dem Gehäuse 1 schwimmend gelagert. Eine schwimmende Lagerung im Sinne der vorliegenden Erfindung bedeutet, dass die Betätigungsmittel 9 in Form des geschlossenen Rings 91 ausgeführt sind und dieser ein axiales Spiel aufweist. Die Sensoren 10 sind bei dieser Ausführung axial ausgerichtet und werden durch eine axiale Bewegung des Rings 91 kontaktiert.

Bei dem vorliegenden Ausführungsbeispiel ist das Bedienelement 8 mit seinen Betätigungsmitteln 9 unmittelbar in der Nähe des Griffs G an der Lenkstange L angeordnet. Folglich kann der Nutzer die Betätigungsmittel 9 in einfacher Weise mit dem Handballen erreichen. Es ist nicht erforderlich, die Hand vom Griff zu nehmen.

Das Auslösen eines Fahrtrichtungsanzeigemoduls F, d.h. die Aktivierung oder Deaktivierung der Leuchteinheit des Fahrtrichtungsanzeigemoduls F erfolgt durch Betätigen des Rings 91 bzw. der Ringsegmente 92, 93 der beiden Fahrtrichtungsanzeigemodule F. Dadurch tritt der Ring 91 bzw. die jeweils betätigten Ringsegmente 92, 93 mit mindestens einem Sensor 10 in Kontakt, wodurch ein Signal zur Steuereinheit 7 ausgesandt wird.

Soweit kein Rückstellelement vorgesehen ist, verbleiben der Ring 91 bzw. die jeweils betätigten Ringsegmente 92, 93 in ihrer durch die Betätigung eingenommenen Position. Nach Beendigung des Abbiegevorgangs oder Spurwechsels bringt der Nutzer den Ring 91 bzw. die jeweils betätigten Ringsegmente 92, 93 wieder in ihre Ausgangsposition.

Sind ein oder mehrere Rückstellelemente 10 verbaut, kehrt der Ring 91 bzw. kehren die jeweils betätigten Ringsegmente 92, 93 unmittelbar nach ihrer Betätigung und damit dem Auslösen des Signals wieder in ihre Ausgangsposition zurück. Nach Beendigung des Abbiegevorgangs oder Spurwechsels betätigt der Nutzer den Ring 91 bzw. die jeweils betätigten Ringsegmente 92, 93 erneut, wodurch ein Signal zum Abschalten Leuchteinheit 3 ausgesandt wird. Auch dann kehrt der Ring 91 bzw. kehren die jeweils betätigten Ringsegmente 92, 93 unter dem Einfluss des oder der Rückstellelemente 10 unmittelbar wieder in ihre Ausgangsposition zurück.

Die Steuereinheiten 7 der beiden Fahrtrichtungsanzeigemodule F sind im Ausführungsbeispiel mit einem Funkmodul ausgestattet, über das sie kabellos miteinander verbunden sind. Im Ausführungsbeispiel sind die Funkmodule nach dem Bluetooth-Standard ausgebildet.

Die Steuereinheiten 7 umfassen jeweils einen Mikroprozessor und sind eingerichtet, bei Betätigung eines Betätigungsmittels 9 der Bedieneinheit 8 eines Fahrtrichtungsanzeigemoduls F die dieser Bedieneinheit 8 zugeordnete Leuchteinheit 3 zu aktivieren bzw. einzuschalten und zugleich die Leuchteinheit 3 des anderen Fahrtrichtungsanzeigemoduls F zu deaktivieren bzw. auszuschalten. Hierzu kommunizieren die Steuereinheiten 7 miteinander: Wird ein Betätigungsmittel 9 der Bedieneinheit 8 eines Fahrtrichtungsanzeigemoduls F betätigt, so aktiviert dieses die Leuchteinheit 3 und meldet diese Betätigung zugleich der Steuereinheit 7 des anderen Fahrtrichtungsanzeigemoduls F, welche die ihr zugeordnete Leuchteinheit 3 deaktiviert, sofern dieses aktiviert ist. In dem Fall, dass gleichzeitig eine Betätigung der Betätigungsmittel 9 beider Fahrtrichtungsanzeigemodule F erfolgt, somit beide Steuereinheiten 7 wechselseitig eine Betätigung der Bedieneinheit 8 des jeweiligen Fahrtrichtungsanzeigemoduls F melden und empfangen, aktivieren beide Steuereinheiten 7 die zugeordnete Leuchteinheit 3, wodurch eine Warnblinkfunktion erzielt ist.

Die Steuereinheit 7 eines jeden Fahrtrichtungsanzeigemoduls F übernimmt unter zudem auch die Überwachung deren Funktionen. So überwacht die Steuereinheit 7 den Ladezustand des Akkumulators 4. Bei Unterschreiten eines vorgegebenen Ladezustands meldet die Steuereinheit 7 dieses der Steuereinheit 7 des anderen Fahrtrichtungsanzeigemoduls F, wodurch durch die Steuereinheiten 7 eine veränderte Blinkfrequenz bei jedem Blinkvorgang jedes Fahrtrichtungsanzeigemoduls F initiiert. Diese geänderte Blinkfrequenz wird zurückgesetzt, sobald der vorgegebene Ladezustand des Akkumulators 4 wieder vorliegt.

Alternativ oder zusätzlich kann die Steuereinheit 7 bei Unterschreiten eines vorgegebenen Ladezustands eine Meldung absetzen, die den Nutzer informiert. Hierzu kann an der Fahrtrichtungsanzeigeeinrichtung ein Indikator vorgesehen sein, der bspw. von einer oder mehreren LEDs gebildet ist. Auch eine akustische Warnung oder auch eine Meldung an ein mittels Bluetooth gekoppelten Smartphone ist denkbar.

Die Steuereinheit 7 ist im Ausführungsbeispiel weiterhin eingerichtet, bei lediglich kurzem Antippen eines Betätigungsmittels einer Bedieneinheit die dieser Bedieneinheit zugeordnete Leuchteinheit lediglich für eine definierte Blinksequenz zu aktivieren.

Das Funkmodul des Fahrtrichtungsanzeigemoduls F ermöglicht außerdem eine Kommunikation mit einem Smartphone, über welches unter anderem Konfigurationen der Fahrtrichtungsanzeigeeinrichtung, beispielsweise die Dauer einer Blinksequenz bei kurzem Antippen einer es Betätigungsmittels einer Bedieneinheit, eingestellt werden können. Auch die Bedienung bzw. Einstellung der Fahrtrichtungsanzeigeeinrichtung mit Hilfe eines separaten Funktasters ist aufgrund des Funkmoduls möglich.

Darüber hinaus ist die Steuereinheit 7 des Fahrtrichtungsanzeigemoduls F mit einer Anlernfunktion ausgestattet. Durch die Anlernfunktion können die beiden Fahrtrichtungsanzeigemodule F der Fahrzeuganzeigeeinrichtung sowie auch weitere Fahrtrichtungsanzeigemodule F, welche an dem jeweiligen Fahrrad oder auch an einem Fahrradanhänger, der an das Fahrrad angehängt ist, verbaut sind, miteinander gekoppelt werden.

Im Ausführungsbeispiel gemäß Figur 2 ist lediglich ein Fahrtrichtungsanzeigemodul F mit einem Akkumulator 4 versehen. Die beiden Fahrtrichtungsanzeigemodule F sind hier über ein Verbindungskabel 6 miteinander elektrisch verbunden, worüber auch die Kommunikation der Steuereinheiten 7 der beiden Fahrtrichtungsanzeigemodule F erfolgt. Im Falle eines niedrigen Ladezustands ist es bei dieser Ausführung allein erforderlich, das mit dem Akkumulator 4 versehene Fahrtrichtungsanzeigemodul F aus dem Lenker L auszubauen und an eine Ladestation anzuschließen, nachdem die elektrische Verbindung der beiden Fahrtrichtungsanzeigeeinrichtungen unterbrochen wurde. Hierzu ist das Verbindungskabel 6 an mindestens einem seiner beiden Enden mit einem nicht dargestellten Stecker versehen, der das Lösen und Wiederherstellen der Verbindung problemlos möglich macht. In Abwandlung des Ausführungsbeispiels ist es auch möglich, die Ladebuchse 5 außerhalb des Lenkers L anzuordnen. Dadurch ist ein Anschluss an ein Ladekabel und somit an eine Ladestation im eingebauten Zustand des Akkumulators 4 möglich.

Die Erfindung stellt eine gut zu bedienende Fahrtrichtungsanzeigeeinrichtung bereit, bei der eine versehentliche Warnblinkfunktion verhindert ist. Zudem eignet sie sich sehr gut zum Nachrüsten. Das gilt insbesondere für das Ausführungsbeispiel nach Figur 1, bei dem beide Fahrtrichtungsanzeigeeinrichtungen über einen Akkumulator bzw. eine Batterie verfügen. Dadurch ist eine Verkabelung miteinander vermieden, so dass die Fahrtrichtungsanzeigeeinrichtungen lediglich in die Enden der Lenkstange eingebaut werden müssen.

In einer weiteren - nicht dargestellten - Ausführungsform ist eine zentrale Steuereinheit angeordnet, die mit den Fahrtrichtungsanzeigemodulen F mittels Kabel oder auch kabellos über Funkmodule verbunden ist. Bei einer solchen Ausführungsform werden beide Leuchteinheiten über diese zentrale Steuereinheit gesteuert, wobei die Steuereinheit eingerichtet ist, bei Betätigung eines Betätigungsmittels einer Bedieneinheit eines Fahrtrichtungsanzeigemoduls F die dieser Bedieneinheit zugeordnete Leuchteinheit zu aktivieren und zugleich die andere Leuchteinheit des anderen Fahrtrichtungsanzeigemoduls F zu deaktivieren sowie bei gleichzeitiger Betätigung der Betätigungsmittel beider Fahrtrichtungsanzeigemodule F deren beide Leuchteinheiten zu aktivieren, wodurch die Warnblinkfunktion erzielt ist. Auch eine Anlernfunktion ist bei dieser Ausführungsform ermöglicht, wodurch eine Kopplung einzelner Fahrtrichtungsanzeigemodule F vorzugsweise kabellos über Funk mit der zentralen Steuereinheit erfolgt. Die zentrale Steuereinheit kann in dem Gehäuse eines Fahrtrichtungsanzeigemoduls F oder auch in einem separaten Gehäuse angeordnet sein.

## Patentansprüche

1. Fahrtrichtungsanzeigeeinrichtung für Fahrräder, umfassend zwei Fahrtrichtungsanzeigemodule F mit jeweils einer Leuchteinheit (3) zur beidseitig der Längsachse eines Fahrrades auskragenden Montage an dem Lenker des Fahrrades, je eine Bedieneinheit (8) zur Montage in der Nähe jeweils eines Griffs (G) des Fahrradlenkers (L) des Fahrrades, sowie wenigstens eine Steuereinheit (7) zur Ansteuerung der beiden Leuchteinheiten (3) der beiden Fahrtrichtungsanzeigemodule (F), die mit den beiden Bedieneinheiten (8) verbunden ist, **dadurch gekennzeichnet, dass** die wenigstens eine Steuereinheit (7) eingerichtet ist, bei Betätigung eines Betätigungsmittels (9) der Bedieneinheit (8) die dieser Bedieneinheit (8) zugeordnete Leuchteinheit (3) zu aktivieren und zugleich die andere Leuchteinheit (3) zu deaktivieren.

2. Fahrtrichtungsanzeigeeinrichtung nach Anspruch 1, **dadurch gekennzeichnet, dass** die wenigstens eine Steuereinheit (7) eingerichtet ist, bei gleichzeitiger Betätigung eines Betätigungsmittels (9) an beiden Bedieneinheiten (8) beide Leuchteinheiten (3) zu aktivieren.

3. Fahrtrichtungsanzeigeeinrichtung nach einem der vorgenannten Ansprüche, **dadurch gekennzeichnet, dass** die wenigstens eine Steuereinheit (7) eingerichtet ist, bei lediglich kurzem Antippen eines Betätigungsmittels (9) einer Bedieneinheit (8) die dieser Bedieneinheit (8) zugeordnete Leuchteinheit (3) lediglich für eine definierte Blinksequenz zu aktivieren.

4. Fahrtrichtungsanzeigeeinrichtung nach einem der vorgenannten Ansprüche, **dadurch gekennzeichnet, dass** die wenigstens eine Steuereinheit (7) mit einer Anlernfunktion versehen ist.

5. Fahrtrichtungsanzeigeeinrichtung nach einem der vorgenannten Ansprüche, **dadurch gekennzeichnet, dass** die wenigstens eine Steuereinheit (7) und/oder wenigstens ein Fahrtrichtungsanzeigemodul (F) mit einem Akkumulator (4) verbunden ist.

6. Fahrtrichtungsanzeigeeinrichtung nach Anspruch 5, **dadurch gekennzeichnet, dass** die wenigstens eine Steuereinrichtung (7) eingerichtet ist, bei Unterschreiten einer Grenzspannung des Akkumulators (4) die Leuchteinheiten (3) bei Betätigung eines Betätigungsmittels (9) einer Bedieneinheit (8) mit einer geänderten Blinkfrequenz anzusteuern.

7. Fahrtrichtungsanzeigeeinrichtung nach einem der vorgenannten Ansprüche, **dadurch gekennzeichnet, dass** eine zentrale Steuereinrichtung (7) angeordnet ist, die kabellos, vorzugsweise per Funk, insbesondere per Bluetooth mit den Fahrtrichtungsanzeigemodulen (F) verbunden ist, wobei die Fahrtrichtungsanzeigemodule (F) mit einem Funkempfänger versehen sind.

8. Fahrtrichtungsanzeigeeinrichtung nach einem der Ansprüche 1 bis 6, **dadurch gekennzeichnet, dass** beide Fahrtrichtungsanzeigemodule (F) eine Steuereinrichtung (7) aufweisen und über ein Verbindungskabel (6) oder kabellos, per Funk, insbesondere per Bluetooth miteinander verbunden sind, wobei die Fahrtrichtungsanzeigemodule (F) zur kabellosen Verbindung ein Funkmodul aufweisen.

9. Fahrtrichtungsanzeigeeinrichtung nach einem der vorgenannten Ansprüche, **dadurch gekennzeichnet, dass** die Fahrtrichtungsanzeigemodule (F) als Lenkerendblinker ausgebildet sind und jeweils ein Gehäuse (1) umfassen, wobei die beiden Bedieneinheiten (8) jeweils außen an einem der Gehäuse (1) angeordnet sind.

10. Fahrtrichtungsanzeigeeinrichtung nach Anspruch 9, **dadurch gekennzeichnet, dass** die Betätigungsmittel (9) der Bedieneinheiten (8) von einem Ring gebildet sind, der das Gehäuse (1) umgibt.

11. Fahrtrichtungsanzeigeeinrichtung nach Anspruch 9, **dadurch gekennzeichnet, dass** die Betätigungsmittel (9) der Bedieneinheiten (8) von mindestens einem Ringsegment gebildet sind, welches das Gehäuse (1) mindestens bereichsweise umgibt.

12. Fahrtrichtungsanzeigeeinrichtung nach einem der Ansprüche 9 bis 11, **dadurch gekennzeichnet, dass** die Betätigungsmittel (9) der Bedieneinheiten (8) jeweils auf einem Gehäuse (1) schwimmend gelagert sind.

13. Fahrtrichtungsanzeigeeinrichtung nach einem der vorgenannten Ansprüche, **dadurch gekennzeichnet, dass** die Betätigungsmittel (9) der Bedieneinheiten (8) mit mindestens einem Sensor (10) korrespondieren.

14. Fahrtrichtungsanzeigeeinrichtung nach einem der vorgenannten Ansprüche, **dadurch gekennzeichnet, dass** die Betätigungsmittel (9) der Bedieneinheiten (8) mit mindestens einem Rückstellelement (11) zusammenwirken.

15. Fahrtrichtungsanzeigeeinrichtung nach einem der Ansprüche 9 bis 14, **dadurch gekennzeichnet, dass** der Akkumulator (4) in einem der Gehäuse (1) angeordnet ist, wobei vorzugsweise in beiden Gehäusen (1) der Fahrtrichtungsanzeigemodule (F) jeweils ein Akkumulator (4) angeordnet ist.
